# EUROPÄISCHE PATENTSCHRIFT

(11) **EP 1 904 748 B1**
(45) Veröffentlichungstag und Bekanntmachung des Hinweises auf die Patenterteilung: **08.12.2010**
(21) Anmeldenummer: 06754428.8
(22) Anmeldetag: 17.06.2006
(51) Int. Cl.: F04D 29/22

(54) **WASSERPUMPENFLÜGELRAD**
WATER PUMP IMPELLER
ROTOR DE POMPE A EAU

(30) Priorität: 06.07.2005 DE 102005031589
(43) Veröffentlichungstag der Anmeldung: 02.04.2008
(73) Patentinhaber: Schaeffler Technologies GmbH & Co. KG, 91074 Herzogenaurach (DE)
(72) Erfinder: MAUSE, Elmar, 91448 Emskirchen (DE); JAHNKE, Patrick, 90425 Nürnberg (DE); TRAUDT, Thomas, 91257 Pegnitz (DE)
(86) Internationale Anmeldenummer: PCT/EP2006/005832
(87) Internationale Veröffentlichungsnummer: WO 2007/003265

(56) Entgegenhaltungen:
- EP-A- 0 207 457
- EP-A- 1 533 104
- DE-A1- 4 409 629
- PATENT ABSTRACTS OF JAPAN Bd. 2000, Nr. 06, 22. September 2000 (2000-09-22) -& JP 2000 073992 A (IDEMITSU PETROCHEM CO LTD), 7. März 2000 (2000-03-07)
- PATENT ABSTRACTS OF JAPAN Bd. 2003, Nr. 12, 5. Dezember 2003 (2003-12-05) & JP 2004 285937 A (MATSUSHITA ELECTRIC IND CO LTD), 14. Oktober 2004 (2004-10-14)

## Beschreibung

### Gebiet der Erfindung

Gegenstand der vorliegenden Erfindung ist ein Flügelrad aus Kunststoff, das insbesondere für eine Kühlmittelpumpe einer Brennkraftmaschine bestimmt ist. Das als ein Spritzgießteil gestaltete Flügelrad umfasst eine Rückwand bzw. Boden mit einer zentrischen Nabe, über die das Flügelrad auf einer Welle aufgesetzt ist. An einer Stirnseite ist die Rückwand einstückig mit Umlenkschaufeln versehen. An der von der Rückwand abgewandten Seite werden die Umlenkschaufeln stirnseitig bereichsweise von einer Formscheibe abgedeckt, wodurch sich Hohlkammern innerhalb des Flügelrades bilden, die von den einzelnen Umlenkschaufeln bzw. der Rückwand und der Formscheibe begrenzt sind. Von den separat herstellbaren Bauteilen sind insbesondere die Rückwand einschließlich der Nabe und den zugehörigen Umlenkschaufeln sowie die Formscheibe stoffschlüssig zusammengefügt.

### Hintergrund der Erfindung

Flügelräder für Kühlmittelpumpen von Brennkraftmaschinen werden bevorzugt aus Kunststoff hergestellt, zur Erzielung eines kostengünstig herstellbaren und gewichtsoptimierten Bauteils. Die Flügelräder dieser Kühlmittelpumpen sind bevorzugt für eine axiale Zuströmung des Kühlmittels ausgelegt, das umgelenkt radial aus dem Flügelrad ausströmt. Dazu ist das Flügelrad mit einer Vielzahl von in radialer oder in axial-radialer Richtung gekrümmt gestalteten Umlenkschaufeln versehen, die einstückig mit der Rückwand des Flügelrades verbunden sind.

Gemäß der DE 38 39 860 A1 weist zur Erzielung einer formschlüssigen Verbindung zwischen dem Flügelrad und einer Antriebswelle der Kühlmittelpumpe ein Zentralabschnitt des Flügelrades einen axial vorstehenden, ein Mehrkantprofil aufweisenden Stutzen auf. Im Einbauzustand greift der Stutzen formschlüssig in eine stirnseitige Aufnahme einer separaten Schraube oder der Pumpenwelle ein. Der Querschnitt der Aufnahme korrespondiert dabei mit dem Querschnitt des axial vorstehenden Stutzens. Nachteilig erfordert das eine Vielzahl von Einzelteilen umfassende Flügelrad einen erhöhten Montageaufwand.

Ein als Pumpenrotor bezeichnetes der zuvor genannten Bauart vergleichbares Flügelrad ist aus der DE 44 09 629 A1 , die alle merkmale des ersten Teils der Auspruche 1 und 2 offenbart, bekannt. Das bekannte Flügelrad ist aus zwei Bauteilen, einem Träger und einer Abdeckung zusammengesetzt, in durch eine Ultraschallschweißung miteinander verbunden sind. Als Werkstoff für die Bauteile des Flügelrades wird ein Kunststoff aus der Gruppe der Polyamide verwendet. Zur Verstärkung beziehungsweise Armierung des Kunststoffs werden beispielsweise Glasfasern oder Kohlefasern eingesetzt.

Die EP 1 533 104 A3 bezieht sich auf ein Verfahren zur Herstellung eines Flügelrades für eine Kreiselpumpe. Dazu wird in einem ersten Schritt mittels eines Spritzgussverfahren eine hintere Deckscheibe mit Nabe und Schaufeln hergestellt. Dieses Bauteil wird anschließend mit einer vorderen ebenfalls aus Kunststoff hergestellten Deckscheibe komplettiert, die Ausnehmungen aufweist, in die bereichsweise die Schaufeln komplementär eingreifen.

Die JP 2004 285937 A offenbart einen trommelartig gestalteten Lüftungsrotor, bei dem einzelne radial kurz gestaltete Schaufeln in der Außenkontur des Rotors zwischen axial beabstandeten Trennwänden positioniert sind.

### Aufgabe der Erfindung

Die Aufgabe der vorliegenden Erfindung besteht darin, ein kostenoptimiertes, eine verbesserte Festigkeit aufweisendes Flügelrad aus Kunststoff zu schaffen, das einen geringen Montageaufwand erfordert.

### Zusammenfassung der Erfindung

Die Aufgabe wird erfindungsgemäß durch die Merkmale der unabhängigen Ansprüche 1, 2 und 11 gelöst.

Den Erfindungen gemeinsam ist die Verwendung eines thermoplastischen Kunststoffs, einem syndiotaktischen Polystyrol (PS-S-GF30). Dieser kostengünstige Werkstoff ist ideal für Flügelräder von Kühlmittelpumpen einsetzbar. Dabei weist dieser Kunststoff eine verbesserte Beständigkeit gegenüber allen in Brennkraftmaschinen eingesetzten Kühlmitteln auf, verbunden mit einer geringen Rissempfindlichkeit. Weiterhin ist der thermoplastische Kunststoff gemäß der Erfindung über das gesamte Temperaturspektrum des Kühlmittels in Brennkraftmaschinen einsetzbar. Die zuvor genannten positiven Materialeigenschaften für das erfindungsgemäße Flügelrad aus syndiotaktische Polystyrol PS-S-GF 30 wurde durch eine spezielle Compoundierung erzielt. Vorteilhaft ist der erfindungsgemäß verwendete thermoplastische Kunststoff mit bestehenden Werkzeugen, d.h. Kunststoff-Spritzeinrichtungen verarbeitbar, wodurch die Werkstoffumstellung keinen Einfluss auf die Herstellkosten aufgrund neuer bzw. anzupassender Werkzeugeinrichtungen nimmt. Das Material PS-S-GF 30 unterbindet vorteilhaft eine bei dem bisher verwendeten Kunststoff auftretende Werkzeugkorrosion, die eine aufwendige und kostenintensive Werkzeugbeschichtung erforderte.

Das erfindungsgemäß eingesetzte syndiotaktische Polystyrol weist bemerkenswerte Materialeigenschaft auf. So erlaubt die sehr geringe Feuchtigkeitsaufnahmekapazität eine technisch einfache Verarbeitung. Weiterhin zeichnet sich dieser Werkstoff durch einen sehr geringen Wärmeausdehnungskoeffizient aus. Zusätzlich ermöglicht PS-S-GF 30 aufgrund des guten Fließverhaltens Bauteile im Spritzgussverfahren mit dünnen Wanddicken herzustellen. Der niederviskose Kunststoff mit hoher Fließfähigkeit benötigt einen geringeren Spritzdruck im Vergleich zu bisher eingesetzten Kunststoffen, wodurch Flügelräder aus PS-S-GF 30 kostengünstig auf Spritzgussmaschinen mit geringerer Zuhaltekraft herstellbar sind.

Durch die geringe Dichte von PS-S-GF 30 (≤ 1,35 Gramm/cm³) ist zusätzlich eine Materialersparnis erzielbar. Für ein für Kühlmittelpumpen bekannter PKW-Brennkraftmaschinen bestimmtes Flügelrad, kann durch die Verwendung von PS-S-GF 30 vorteilhaft eine Gewichtsersparnis von ≥ 24 % erzielt werden. Ein Flügelrad aus PS-S-GF 30 zeichnet sich durch seine Formstabilität, sein geringes Verzugsverhalten sowie durch eine gewünschte niedrigere Verarbeitungstemperatur als bei bisher eingesetzten Kunststoffen aus.

Durch die Substitution des bisher verwendeten Werkstoffs PPS-GF40 durch den erfindungsgemäß eingesetzten syndiotaktischen Polystyrol, zur Herstellung von Kunststoff-Flügelrädern, stellt sich vorteilhaft eine Kostenreduzierung des Flügelrades ein, ohne nachteiligen Einfluss auf die Festigkeit, die Chemiekalienbeständigkeit oder die Lebensdauer des Flügelrades.

Die Erfindung gemäß Anspruch 1 bezieht sich auf ein mehrere Bauteile umfassendes Flügelrad, wobei alle einzelnen separat hergestellten Bauteile, aus syndiotaktischem Polystyrol PS-S-GF 30 hergestellt sind.

Der Anspruch 2 bezieht sich auf eine Erfindung, mit einem einteilig gestalteten, Hinterschnitte aufweisenden Flügelrad, bei dem als Werkstoff syndiotaktischer Polystyrol PS-S-GF 30 als thermoplastischer Kunststoff eingesetzt ist. Vorteilhaft erfordert die erfindungsgemäße Werkstoffumstellung auch für einteilige Flügelräder keinerlei Anpassung bzw. Änderung der Schieberwerkzeuge bzw. des für die Herstellung eingesetzten Spritzgießverfahrens.

Die Erfindung nach Anspruch 11 bezieht sich auf ein Verfahren, das eine Herstellfolge und Montageschritte beansprucht, nach dem ein mehrteilig gestaltetes Flügelrad herstellbar ist. Die Herstellung des mehrteiligen Flügelrades erfolgt vorteilhaft in folgenden Schritten. Zunächst werden die Bauteile, die Rückwand einschließlich der Nabe und den zugehörigen Umlenkschaufeln einerseits, sowie die Formscheibe andererseits in getrennten Spritzvorgängen hergestellt. Zumindest auf eine Kontaktzone in einem Fügebereich zwischen axial vorstehenden Noppen oder Nasen an den Umlenkschaufeln der Rückwand und korrespondierenden Ausnehmungen der Formscheibe wird ein Klebstoff aufgetragen. Zur Erzielung einer stoffschlüssigen Verbindung werden diese Bauteile anschließend zusammengefügt und kurzzeitig verpresst. Eine der Nabe im Bereich der Rückwand dient zur Aufnahme einer separaten Buchse, die ebenfalls durch eine Klebung stoffschlüssig fixiert wird.

Weitere vorteilhafte Ausgestaltungen der Erfindung sind Gegenstand der abhängigen Ansprüche 3 bis 10.

Zur Erzielung einer stoffschlüssigen Verbindung aller Bauteile für ein mehrteilig aufgebautes Flügelrad ist bevorzugt eine Klebung vorgesehen. Damit ist eine größere Fertigungsgenauigkeit erzielbar, im Vergleich zu einem bisher eingesetzten Ultraschall- bzw. UV- Schweißverfahren. Vorteilhaft kann bei einer Klebung eine Zentrierung am Flügelrad entfallen, da diese innerhalb des Werkzeugs erfolgt. Aufgrund der verbesserten eng tolerierten Fertigungsgenauigkeit stellt sich durch die Klebung ein verbesserter Rundlauf ein. Somit kann selbst bei im Durchmesser größer dimensionierten Flügelrädern oder für Flügelräder, die für hohe Drehzahlen bestimmt sind, eine ausreichende Laufgenauigkeit erreicht werden, ohne ein zusätzliches Auswuchten.

Eine bevorzugte Ausgestaltung eines mehrere Einzelteile umfassendes Flügelrad sieht vor, dass die Umlenkschaufeln partiell vorstehende Nasen oder Noppen einschließen, die mit entsprechenden Ausnehmungen der Formscheibe korrespondieren. Im Einbauzustand erfolgt durch die formschlüssig in die Ausnehmungen eingreifenden Noppen eine Zentrierung der Formscheibe, wobei eine Klebung in Kontaktzonen zwischen den Noppen und den Ausnehmungen diese Bauteile verbindet.

Als geeigneter Klebstoff zur Erzielung einer stoffschlüssigen Verbindung der Bauteile, Rückwand und Formscheibe ist gemäß der Erfindung bevorzugt Cyanoacrylate, Epoxy oder Syntetic Rubber vorgesehen. Für die Klebung wird in einem Fügebereich zwischen den axial vorstehenden Noppen und den Ausnehmungen der Formscheibe Klebstoff auf bzw. an zumindest einem Bauteil aufgetragen, bevor die Bauteile ineinander gefügt werden, verbunden mit einer zeitlich begrenzten Pressung.

Das Flügelrad gemäß der Erfindung weist zusätzlich eine separate Buchse auf, die in eine zentrische Bohrung der Nabe und damit der Rückwand positioniert ist. Die aus einem Metallwerkstoff oder aus einem Kunststoff hergestellte, zylindrische Buchse wird dabei ebenfalls mittels einer Klebung in der Nabe lagefixiert. Im Einbauzustand ist das Flügelrad beispielsweise mittels einer Presspassung zwischen der Buchse und einer Flügelradwelle drehfixiert.

Alternativ zu einer separaten Buchse schließt die Erfindung ein aus einem thermoplastischen Kunststoff hergestelltes Flügelrad ein, dessen Nabe unmittelbar, d.h. ohne eine separate Buchse mittels einer Presspassung und/oder einer Klebung auf der Welle des Flügelrades drehstarr befestigt ist.

Der erfindungsgemäß für das Flügelrad der Kühlmittelpumpe eingesetzte thermoplastische Kunststoff ist beigefarbig. Damit ergibt sich eine deutliche Unterscheidung zwischen den bisher dunkelfarbig aus PPS hergestellten Flügelrädern im Vergleich zu dem erfindungsgemäß beigen Flügelrad.

Für ein einteilig gestaltetes Flügelrad bietet es sich an, die Buchse als ein Einlegeteil in das Spritzwerkzeug einzubringen, das während des Spritzvorgangs vom Kunststoff PS-S-GF 30 des Flügelrades umschlossen wird, zur Erzielung einer drehstarren Verbindung.

Die Erfindung schließt weiterhin ein Flügelrad ein, dessen Umlenkschaufeln eine dreidimensionale (3D) Krümmung aufweisen

Weitere Merkmale der Erfindung ergeben sich aus der nachfolgenden Beschreibung zu den Zeichnungen, in denen Ausführungsbeispiele der Erfindung dargestellt sind.

### Kurze Beschreibung der Zeichnungen

Es zeigen:
- Figur 1: in einer Perspektive das erfindungsgemäße Flügelrad in Kombination mit einer Welle;
- Figur 2: die Vorderansicht eines erfindungsgemäßen Flügelrades;
- Figur 3: das Flügelrad gemäß Figur 2 in einer Schnittansicht, ent- lang der Linie 3-3;
- Figur 4: in einer Ansicht die Rückwand des erfindungsgemäßen Flügelrades;
- Figur 5: eine Schnittansicht die Rückwand gemäß Figur 4, entlang der Linie 5-5;
- Figur 6: die Formscheibe des erfindungsgemäßen Flügelrades in der Vorderansicht;
- Figur 7: in einer Schnittansicht die Formscheibe nach Figur 6, ent- lang der Linie 7-7;
- Figur 8: in einer Perspektive ein Flügelrad mit 3D-gekrümmten Schau- feln.

### Detaillierte Beschreibung der Zeichnungen

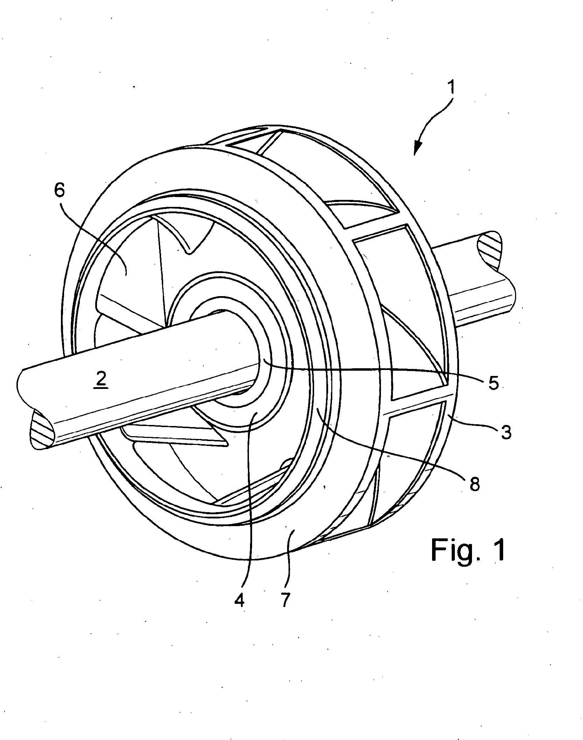

Der Aufbau eines erfindungsgemäßen Flügelrades 1 ist in der Figur 1 abgebildet. Das auf einer Welle 2 drehstarr lagepositionierte Flügelrad 1 ist dazu bestimmt, im Einbauzustand eine Zirkulation des Kühlmediums, insbesondere Kühlwasser sicherzustellen. Der Aufbau des Flügelrades 1 umfasst eine Rückwand 3, die auch als Boden zu bezeichnen ist und die zentrisch eine Nabe 4 einschließt. Eine Bohrung 5 der Nabe 4 dient zur Aufnahme der Welle 2. Die Rückwand 3 ist weiterhin einstückig mit radial oder axial-radial gekrümmt ausgebildeten Umlenkschaufeln 6 verbunden, die innenseitig vom Bereich der Nabe 4 ausgehend sich radial bis zur Außenkontur der Rückwand 3 erstrecken.

Stirnseitig sind die Umlenkschaufeln 6 von einer Formscheibe 7 abgedeckt, die von der Außenkontur der Umlenkschaufeln 6 ausgehend, einen begrenzten stirnseitigen Bereich der Umlenkschaufeln abdecken. Innenseitig ist die Formscheibe 7 einstückig mit einem rohrförmig gestalteten Ansatz 8 versehen. Im Betriebszustand wird das Kühlmedium axial in Richtung der Welle 2 dem Flügelrad 1 zugeführt und innerhalb des Flügelrades 1 umgelenkt, wobei das Kühlmedium radial aus dem Flügelrad 1 austritt.

Weitere Details des Flügelrades 1 verdeutlichen die Zeichnungen 2 und 3. Die Formgebung der Umlenkschaufel 6 zeigt ein örtlich gezeichneter Ausbruch in der Formscheibe 7. Die auch als Kreisringscheibe zu bezeichnende Formscheibe 7 erstreckt sich weitestgehend über einen halben Abstand, der sich zwischen den Außenkonturen der Nabe 4 und der Rückwand 3 einstellt. Der Innendurchmesser "dᵢ" von dem Ansatz 8 der Formscheibe 7 bestimmt den Eintrittsquerschnitt für das Kühlmittel in das Flügelrad 1. Das mehrteilig aufgebaute Flügelrad 1, bestehend aus der Rückwand 3, der Formscheibe 7 sowie einer in die Bohrung 5 der Nabe 4 eingesetzten Buchse 9a sind übereinstimmend aus einem thermoplastischen Kunststoff (syndiotaktischer Polystyrol, PS-S-GF 30) hergestellt. Aufgrund der guten Klebeeigenschaften dieses Werkstoffs sind alle Einzelteile des Flügelrades 1 miteinander verklebt.

Ein erster Fügebereich 10 ist dabei zwischen der Formscheibe 7 und den Umlenkschaufeln 6 vorgesehen. Gezielt wird dabei zumindest auf eine Kontaktzone im Fügebereich 10 an der Formscheibe 7 oder den Umlenkschaufeln 6 ein geeigneter Klebstoff aufgetragen, bevor diese Bauteile zumindest kurzfristig verpresst werden, bis die Klebung ausgehärtet ist. Alternativ bietet es sich weiterhin an, den Klebstoff auf beide Kontaktzonen im Fügebereich 10 aufzutragen. Außerdem ist die Buchse 9a durch eine Klebung in der Nabe 4 dauerfest fixiert. Dazu wird die Mantelfläche der Buchse 9a oder die Bohrung 5 der Nabe 4 mit einem Klebstoff benetzt, bevor die Buchse 9a in die Bohrung 5 eingesetzt wird. Bevorzugt weist die Buchse 9a außenseitig eine Rändelung auf, wodurch sich zusätzlich ein formschlüssige, verdrehgesicherte Befestigung einstellt.

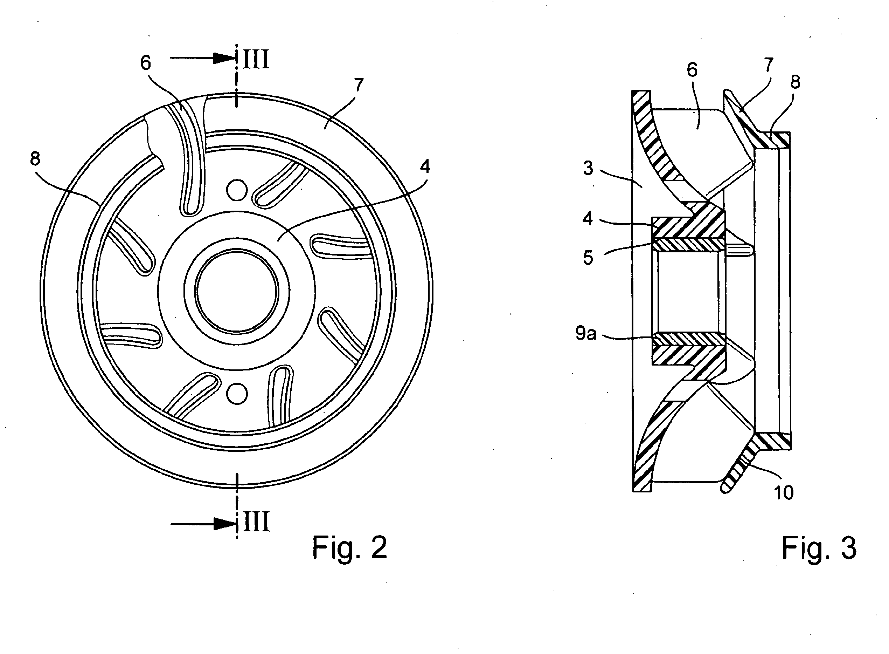

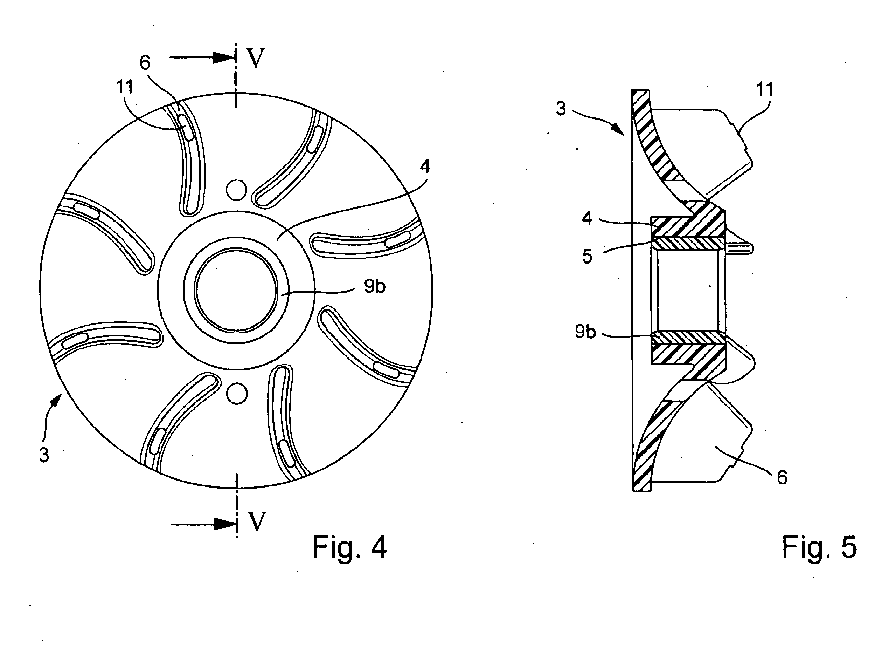

In den Figuren 4 und 5 ist die Rückwand 3, die einstückig mit den Umlenkschaufeln 6 und der Nabe 4 verbunden ist in zwei Ansichten dargestellt. Alternativ zu der Buchse 9a gemäß Figur 3 umfasst die Nabe 4 gemäß Figur 5 eine aus Stahl hergestellte Buchse 9b. Zur Erzielung einer drehfixierten Einbaulage ist die Buchse 9b mittels einer Klebung oder einer Presspassung drehstarr in der Nabe 4 positioniert. Die Formgebung der Umlenkschaufeln 6 sowie deren Längserstreckung und Aufteilung an der Rückwand 3 zeigt die Figur 4. Gemäß Figur 5 ist jede Umlenkschaufel 6 an der schräg ausgerichteten Stirnseite mit jeweils einem vorstehenden Noppen bzw. Zapfen 11 versehen. Alle Noppen 11 gemeinsam bilden im Fügebereich 10 eine den Umlenkschaufeln 6 zugeordnete Kontaktzone.

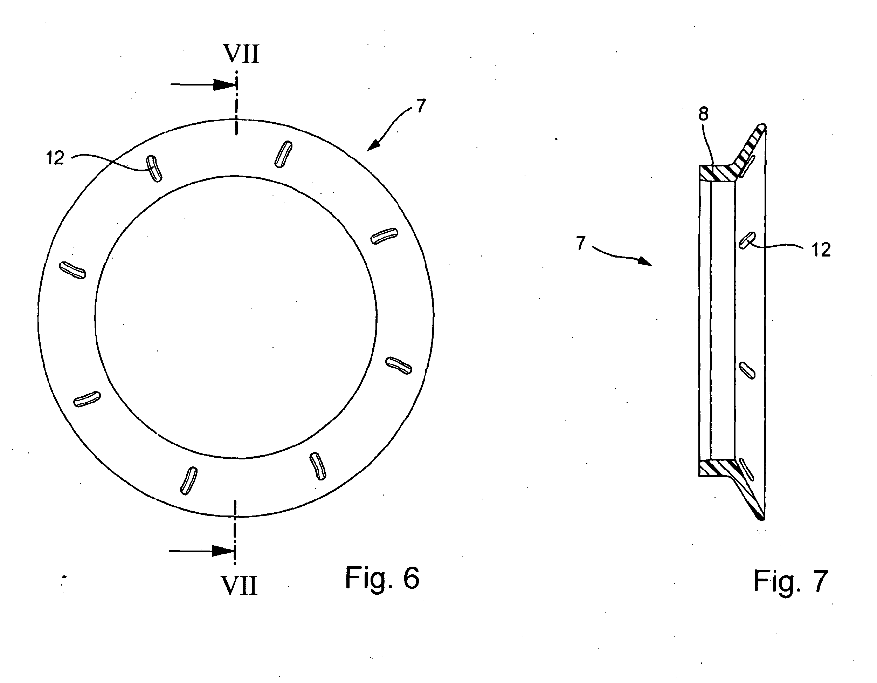

In den Figuren 6 und 7 ist die Anordnung, die Lage sowie die Ausgestaltung der Noppen 11 dargestellt, die mit entsprechenden Ausnehmungen 12 in der Formscheibe 7 korrespondieren. Die Ausnehmungen 12 bilden damit Kontaktzonen der Formscheibe 7 im Fügebereich 10.

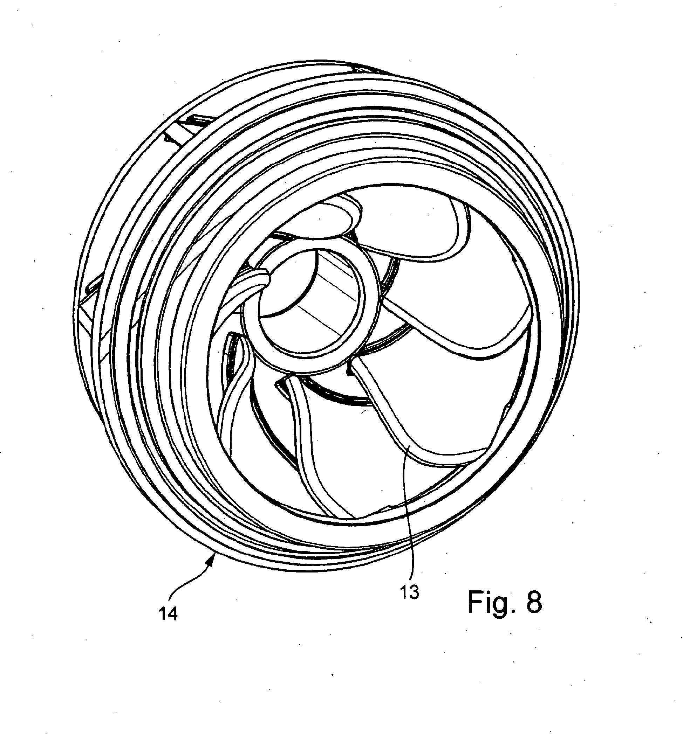

Das Flügelrad 14 gemäß Figur 8 umfasst Umlenkschaufeln 13, die übereinstimmend eine dreidimensionale (3D) Krümmung aufweisen.

**Bezugszahlenliste**
- 1: Flügelrad
- 2: Welle
- 3: Rückwand
- 4: Nabe
- 5: Bohrung
- 6: Umlenkschaufel
- 7: Formscheibe
- 8: Ansatz
- 9a: Buchse
- 9b: Buchse
- 10: Fügebereich
- 11: Noppen
- 12: Ausnehmung
- 13: Umlenkschaufel
- 14: Flügelrad

## Patentansprüche

1. Flügelrad aus Kunststoff, für eine Kühlmittelpumpe einer Brennkraftmaschine, mit einem mehrteiligen Aufbau, wobei das Flügelrad (1,14) separat als Spritzgussteile hergestellte Bauteile umfasst, eine Nabe (4), zum Aufsetzen auf einer Welle (2) und einer Umlenkschaufeln (6) aufweisenden Rückwand (3), wobei die Umlenkschaufeln (6) stirnseitig von einer Formscheibe (7) abgedeckt und zumindest die Rückwand (3) und die Formscheibe (7) stoffschlüssig zusammengefügt sind, **dadurch gekennzeichnet, dass** als Werkstoff für das Flügelrad (1,14) syndiotaktisches Polystyrol PS-S-GF30, ein thermoplastischer Kunststoff vorgesehen ist.

2. Flügelrad aus Kunststoff, für eine Kühlmittelpumpe einer Brennkraftmaschine, ausgebildet als ein Spritzgussteil mit einer Nabe (4) zum Aufsetzen auf einer Welle (2) und einer Rückwand (3) mit Umlenkschaufel (6), die stirnseitig von einer Formscheibe (7) abgedeckt sind, **dadurch gekennzeichnet, dass** zur Herstellung des einteiligen, Hinterschnitte aufweisenden Flügelrades (1,14) Schieberwerkzeuge eingesetzt werden und als Werkstoff ein thermoplastischer Kunststoff, syndiotaktisches Polystyrol PS-S-GF30, vorgesehen ist.

3. Flügelrad nach Anspruch 1, wobei die Rückwand (3) und die Formscheibe (7) mittels einer Klebung dauerfest verbunden sind, insbesondere mit axial oder axial-radial gekrümmten Umlenkschaufeln (6, 13).

4. Flügelrad nach Anspruch 1, wobei zumindest drei Umlenkschaufeln (6,13) stirnseitig partiell vorstehende Noppen (11) aufweisen, die zur Positionierung und Zentrierung formschlüssig in korrespondierende Ausnehmungen (12) der Formscheibe (7) eingreifen.

5. Flügelrad nach Anspruch 1, bei dem als Klebstoff zur stoffschlüssigen Verbindung der separaten Bauteile des Flügelrades (1,14) beispielsweise Cyanoacrylate, Epoxy oder Syntetic Rubber eingesetzt ist.

6. Flügelrad nach Anspruch 1, bei dem eine separate Buchse (9a, 9b) in eine zentrische Bohrung (5) der Nabe (4) durch Klebung lagefixiert ist, wobei die Buchse (9a, 9b) im Einbauzustand des Flügelrades (1,14) auf der Welle (2) drehfixiert ist.

7. Flügelrad nach Anspruch 1, dessen Nabe (4) mittels einer Klebung unmittelbar mit der Welle (2) stoffschlüssig drehstarr befestigt ist.

8. Flügelrad nach Anspruch 1, das aus einem beigefarbenen syndiotaktischen Polystyrol PS-S-GF30 hergestellt ist.

9. Flügelrad nach Anspruch 2, bei dem die Nabe (4) der Rückwand (3) eine als Einlegeteil gestaltete Buchse (9b) umfasst, die im Einbauzustand des Flügelrades (1,14) auf der Welle (2) aufgepresst ist.

10. Flügelrad nach Anspruch 1, das dreidimensional (3D) gekrümmte Umlenkschaufeln (13) einschließt.

11. Verfahren zur Herstellung eines mehrteiligen Flügelrades (1,14) nach Anspruch 1, **gekennzeichnet durch** die Schritte, dass:
- die Rückwand (3) einschließlich Nabe (4) und Umlenkschaufeln (6,13) sowie die Formscheibe (7) in getrennten Spritzvorgängen hergestellt werden;
- zumindest eine Kontaktzone in einem Fügebereich (10) zwischen axial vorstehenden Noppen (11) der Umlenkschaufeln (6,13) und korrespondierenden Ausnehmungen (12) der Formscheibe (7) mit einem Klebstoff benetzt wird;
- zur Erzielung einer stoffschlüssigen Verbindung die Bauteile, Rückwand (3) und Formscheibe (7) zusammengefügt und verpresst werden;
- in die zentrische Bohrung (5) der Nabe (4) ein separate Buchse (9a, 9b) eingesetzt und mittels einer Klebung lagefixiert ist.

## Claims

1. Impeller consisting of plastic, for a coolant pump of an internal combustion engine, having a multipart construction, wherein the impeller (1, 14) comprises components produced separately as injection-molded parts, a hub (4), for seating upon a shaft (2), and a back wall (3) which has guide vanes (6), wherein the guide vanes (6) are covered on the end face by a molded disk (7) and at least the back wall (3) and the molded disk (7) are joined together in a materially bonding manner, **characterized in that** syndiotactic polystyrene PS-S-GF30, a thermoplastic, is provided as material for the impeller (1, 14).

2. Impeller consisting of plastic, for a coolant pump of an internal combustion engine, designed as an injection-molded part with a hub (4), for seating upon a shaft (2), and a back wall (3) having guide vanes (6) which are covered on the end face by a molded disk (7), **characterized in that**, for producing the one-piece impeller (1, 14) which has undercuts, slide molds are used and a thermoplastic, syndiotactic polystyrene PS-S-GF30, is provided as material.

3. Impeller according to Claim 1, wherein the back wall (3) and the molded disk (7) are durably connected by means of adhesive bonding, especially to axially or axially-radially curved guide vanes (6, 13).

4. Impeller according to Claim 1, wherein at least three guide vanes (6, 13) on the end face have partially projecting knobs (11) which, for positioning and centering, engage in corresponding recesses (12) of the molded disk (7) in a positive locking manner.

5. Impeller according to Claim 1, in which for example cyanoacrylate, epoxy or synthetic rubber is used as adhesive for the materially bonding connection of the separate components of the impeller (1, 14).

6. Impeller according to Claim 1, in which a separate bush (9a, 9b) is positionally fixed in a central bore (5) of the hub (4) by means of adhesive bonding, wherein the bush (9a, 9b) is torsionally fixed on the shaft (2) in the installed state of the impeller (1, 14).

7. Impeller according to Claim 1, the hub (4) of which is directly fastened to the shaft (2) in a materially bonding, torsionally rigid manner by means of adhesive bonding.

8. Impeller according to Claim 1, which is produced from a beige-colored syndiotactic polystyrene PS-S-GF30.

9. Impeller according to Claim 2, in which the hub (4) of the back wall (3) comprises a bush (9b) which is designed as an inserted part and which is pressed on the shaft (2) in the installed state of the impeller (1, 14).

10. Impeller according to Claim 1, which includes three-dimensionally (3D) curved guide vanes (13).

11. Method for producing a multipart impeller (1, 14) according to Claim 1, **characterized by** the steps that:
- the back wall (3), inclusive of the hub (4) and guide vanes (6, 13), and also the molded disk (7), are produced in separate injection operations;
- at least one contact zone, in a joining region (10) between axially projecting knobs (11) of the guide vanes (6, 13) and corresponding recesses (12) of the molded disk (7), is wetted with an adhesive;
- for achieving a materially bonding connection, the components, back wall (3) and molded disk (7), are joined together and pressed;
- a separate bush (9a, 9b) is inserted in the central bore (5) of the hub (4) and positionally fixed by means of adhesive bonding.

## Revendications

1. Roue à aubes en matière synthétique pour pompe à fluide de refroidissement d'un moteur à combustion interne, présentant une structure en plusieurs pièces, la roue à aubes (1, 14) comprenant
des composants fabriqués séparément sous la forme de pièces moulées par injection, à savoir un moyeu (4) destiné à être placé sur un arbre (2) et une paroi arrière (3) qui présente des aubes de guidage (6),
les aubes de guidage (6) étant recouvertes frontalement par un disque moulé (7), au moins la paroi arrière (3) et le disque moulé (7) étant assemblés en correspondance de matière, **caractérisée en ce que**
le matériau prévu pour la roue à aubes (1, 14) est un polystyrène syndiotactique PS-S-GF30 ou une matière synthétique thermoplastique.

2. Roue à aubes en matière synthétique pour pompe à fluide de refroidissement d'un moteur à combustion interne, configurée comme pièce moulée par injection comprenant
un moyeu (4) destiné à être placé sur un arbre (2) et une paroi arrière (3) qui présente des aubes de guidage (6) recouvertes frontalement par un disque moulé (7),
**caractérisée en ce que**
pour fabriquer la roue à aubes (1, 14) en une seule pièce et présentant des contre-dépouilles, on utilise des outils coulissants et comme matériau pour la roue à aubes (1, 14) un polystyrène syndiotactique PS-S-GF30 ou une matière synthétique thermoplastique.

3. Roue à aubes selon la revendication 1, dans laquelle la paroi arrière (3) et le disque moulé (7) sont reliés par un collage durable en particulier aux aubes de guidage (6, 13) courbées axialement ou axialement-radialement.

4. Roue à aubes selon la revendication 1, dans laquelle au moins trois aubes de guidage (6, 13) présentent des bosses (11) qui débordent partiellement du côté frontal et qui s'engagent en correspondance de forme dans des découpes correspondantes (12) du disque moulé (7) pour assurer le positionnement et le centrage.

5. Roue à aubes selon la revendication 1, dans laquelle l'adhésif utilisé pour la liaison en correspondance de matière des différents composants de la roue à aubes (1, 14) est par exemple un cyanoacrylate, un époxy ou un caoutchouc synthétique.

6. Roue à aubes selon la revendication 1, dans laquelle une douille séparée (9a, 9b) est immobilisée dans un alésage central (5) du moyeu (4) par collage, la douille (9a, 9b) étant fixée à rotation solaire sur l'arbre (2) lorsque la roue à aubes (1, 14) est montée.

7. Roue à aubes selon la revendication 1, dont le moyeu (4) est fixé directement à rotation solidaire sur l'arbre (2) en correspondance de matière au moyen d'un collage.

8. Roue à aubes selon la revendication 1, constituée de polystyrène syndiotactique PS-S-GF30 coloré.

9. Roue à aubes selon la revendication 2, dans laquelle le moyen (4) de la paroi arrière (3) comprend une douille (9b) configurée comme pièce d'insertion qui est repoussé contre l'arbre (2) lorsque la roue à aubes (1, 14) est montée.

10. Roue à aubes selon la revendication 1, qui englobe des aubes de guidage (13) à courbure tridimensionnelle (3D).

11. Procédé de fabrication d'une roue à aubes (1, 14) en plusieurs pièces selon la revendication 1, **caractérisé par** les étapes qui consistent à :
- fabriquer la paroi arrière (3) y compris son moyeu (4) et les aubes de guidage (6, 13) ainsi que le disque moulé (7) par des opérations séparées d'injection,
- mouiller d'un adhésif au moins une zone de contact dans une partie de jonction (10) entre des bosses (11) débordant axialement des aubes de guidage (6, 13) et des découpes correspondantes (12) du disque moulé (7),
- pour obtenir une liaison en correspondance de matière, assembler et comprimer les composants, à savoir la paroi arrière (3) et le disque moulé (7) et
- insérer une douille séparée (9a, 9b) dans l'alésage central (5) du moyeu (4) et l'immobiliser au moyen d'un collage.
